(19) Europäisches Patentamt
European Patent Office
Office européen des brevets

(11) **EP 1 980 391 A1**

(12) **EUROPEAN PATENT APPLICATION**
published in accordance with Art. 158(3) EPC

(43) Date of publication:
**15.10.2008 Bulletin 2008/42**

(51) Int Cl.:
*B32B 15/08* (2006.01)  *C08J 5/18* (2006.01)
*C08K 3/22* (2006.01)  *C08L 27/12* (2006.01)
*C08L 33/06* (2006.01)  *C08L 67/04* (2006.01)

(21) Application number: **07707886.3**

(22) Date of filing: **01.02.2007**

(86) International application number:
**PCT/JP2007/051700**

(87) International publication number:
**WO 2007/088930 (09.08.2007 Gazette 2007/32)**

(84) Designated Contracting States:
**DE**

(30) Priority: **02.02.2006 JP 2006025382**

(71) Applicant: **MITSUBISHI PLASTICS, INC.**
**Tokyo 103-0021 (JP)**

(72) Inventors:
• **NISHIDA, Miki**
**Nagahama-shi, Shiga 5268660 (JP)**
• **TAKAGI, Jun**
**Nagahama-shi, Shiga 5268660 (JP)**

• **HIRUMA, Takashi**
**Nagahama-shi, Shiga 5268660 (JP)**
• **WATANABE, Takayuki**
**Nagahama-shi, Shiga 5268660 (JP)**
• **KATSUHARA, Kazunari**
**Nagahama-shi, Shiga 5268660 (JP)**

(74) Representative: **Gille Hrabal Struck Neidlein Prop Roos**
**Patentanwälte**
**Brucknerstrasse 20**
**40593 Düsseldorf (DE)**

(54) **HEAT SHIELD SHEET**

(57)    In order to provide a novel heat shield sheet allowing a high reflectance with respect to light beam in the near-infrared region and a high heat-shield effect to be obtained, a heat shield sheet is proposed, comprising a resin composition containing a resin having a refractive index of less than 1.52 and a fine powdery filler having a refractive index of 1.60 or greater, and having an average reflectance of 80% or greater at wavelengths from 810nm to 2,100nm.

Figure 1

**Description**

[Technical Field]

The present invention relates to a heat shield sheet, which may be used as a constitutive member of a heat shield material used to prevent temperature increase due to light beam, such as, an exterior material constituting a roof, a window, an outer wall, or the like, of buildings and constitutions, an exterior material constituting a window or a body of a vehicle, such as, an automobiles an aircraft or a ship, a back sheet used in a solar battery, or the like, a partition panel, a blind, a curtain, a tent material, an infrared radiation reflection film for agricultural use, cover for preventing increase of automobile-bus in-vehicle temperature, and the like.

[Background Art]

As the roofs, outer walls, windows, and the like, of buildings and constitutions and automobiles are always exposed to day light, in order to prevent room temperature increase in the summer and to curtail cooling expenses such as of air conditioners, forming of exterior materials from heat shield materials, pasting of heat-shield films on the surface of exterior materials, and the like, are carried out. If the usage of air conditioners and the like decreases, the amount of global warming gas generated can be held down, such heat shield materials or heat shield sheets are attracted attention, also from the view point of environmental issues.

Such sheets having heat shield property have been studied for a long time. For instance, a technique for vapor depositing a thin metal layer on a film surface is disclosed in Patent Reference 1, a technique using a hologram in combination with a film is disclosed in Patent Reference 2, and, furthermore, as methods for kneading-in particles having heat shield effect, methods for obtaining heat shield property using near infrared radiation absorbing dye are disclosed in Patent Reference 3 and the like.

In addition, heat shield sheet containing specific amount of aminium series compound or diimmonium series compound in a plastic resin is disclosed in Patent Reference 4.

Further in addition, a heat shield film containing a thermoplastic resin and a mixed pigment is disclosed in Patent Reference 5.

[Patent Reference 1] Japanese Patent Publication No. S59-13325
[Patent Reference 2] Japanese Patent Application Laid-open No. H7-0274738
[Patent Reference 3] Japanese Patent Publication No. H4-45546
[Patent Reference 4] Japanese Patent Application Laid-open No. H8-81567
[Patent Reference 5] Japanese Patent Application Laid-open No.2002-12679

[Disclosure of the Invention]

The present invention provides a novel heat shield sheet having a high reflectance with respect to light beam in particular in the infrared region and allowing a high heat-shield effect to be obtained.

[Means to Solve the Issues]

The present invention proposes a heat shield sheet comprising a resin composition containing a resin having a refractive index of less than 1.52 (resin constituting the principal component of the resin composition and referred to as "base resin") and a fine powdery filler having a refractive index of 1.60 or greater, having an average reflectance at wavelengths of 810nm to 2,100nm of 80% or greater.

Owing to the refractive scattering at the interface between the base resin and the fine powdery filler, the heat shield sheet of the present invention allows an infrared reflectance (average reflectance) at wavelengths of 810nm to 2,100nm to be increased to 80% or greater, and a very good heat shield property to be obtained.

Thus, the heat shield sheet of the present invention, by being formed or pasted to a substrate, can be used as a constitutive material of a heat shield material used to prevent temperature increase due to light beam, such as, an exterior material constituting a roof, a window, an outer wall, or the like, of buildings and constitutions, an exterior material constituting a window or a body of a vehicle, such as, an automobile, an aircraft or a ship, a back sheet used in a solar battery, or the like, a partition panel, a blind, a curtain, a tent material, an infrared radiation reflection film for agricultural use, cover for preventing increase of automobile-bus in-vehicle temperature, and the like.

Note that in the present invention, "heat shield material" includes both those obtained by processing or forming the heat shield sheet of the present invention, and those obtained by pasting the heat shield sheet of the present invention to a substrate, and the morphology includes films, sheets, plates, and other formed various morphologies.

In addition, under JIS definition, "sheet" in general refers to a product that is thin, in general with a small thickness despite the length and the width, and flat, and "film" in general refers to a thin, flat product, with a thickness that is extremely small compared to the length and width, and a maximum thickness that is limited arbitrarily, and in general provided in the form of a roll (Japanese industry specification JISK6900). However, since the boundary between a sheet and a film is not certain, and there is no need to distinguish the two word-wise in the present invention, "sheet" will be included even when referring to "film", and "film" will be included even when referring to "sheet" in the present invention.

In addition, in the specification, the statement "X to Y" (X and Y are arbitrary numbers), unless otherwise specified, means "X or greater and Y or less", and includes the meaning "preferably greater than X and less than Y".

[Brief Description of the Drawings]

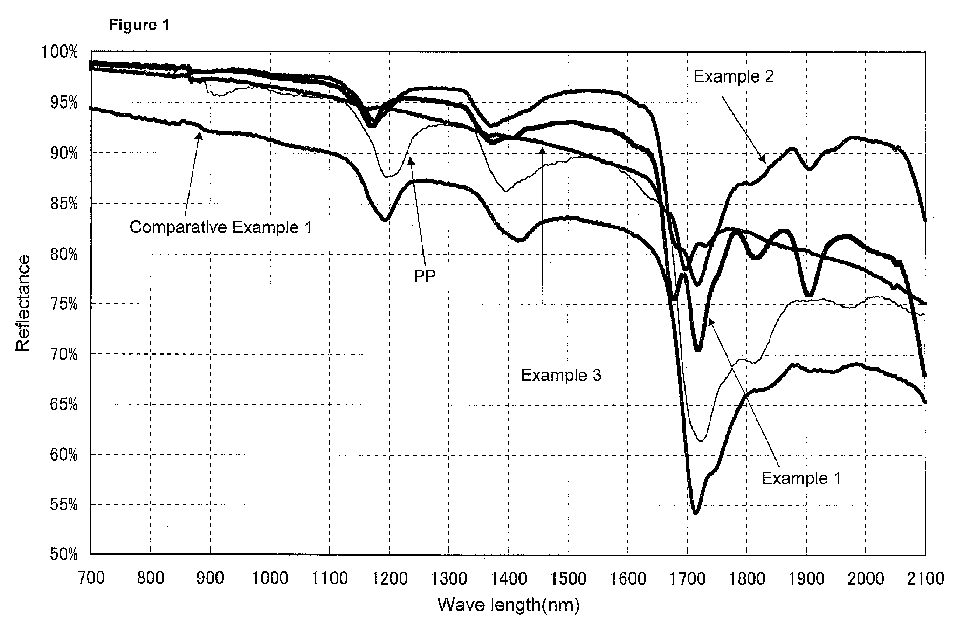

[Fig. 1] Graph showing the results of measurements of the reflectance (measured at wavelengths of 810nm to 2,100nm) of the sheets obtained in the examples and comparative example.

[Best Mode for Carrying out the Invention]

Hereinafter, embodiments of the present invention will be explained; the scope of the present invention is not limited to the embodiments explained below.

In the specification, the expression "principal component", unless otherwise specified, contains the meaning that another constituent is allowed to be included in a range that does not impair the function of the principal component. Without limiting in particular the proportional content of the principal component, the principal component (2 constituents or more are principal components, the total quantity thereof) occupies, in the composition, 50 mass% or greater, preferably 70 mass% or greater, and particularly preferably 90 mass% or greater (100% contain).

The heat shield sheet according to the present embodiment (hereinafter referred to as "present heat shield sheet") is a heat shield sheet comprising a resin composition ("referred to as the present resin composition") containing a base resin having a refractive index of less than 1.52 and a fine powdery filler having a refractive index of 1.60 or greater, with an average reflectance at the wavelengths of 810nm to 2,100nm of 80% or greater.

<Resin with a refractive index of less than 1.52>

If the refractive index (n) of the base resin (: resin that is the principal component of the present resin composition) is less than 1.52, light reflectivity due to the refractive scattering at the interface of the base resin and fine powdery filler can be obtained. Since this refractive scattering effect becomes greater as the refractive index of the base resin and fine powdery filler becomes greater, the refractive index of the base resin is preferably small.

As the resin having a refractive index of less than 1.52, at least one species of resin chosen from the group comprising aliphatic polyester series resins, acrylic series resins, fluorine series resins and polyolefin series resins, or mixed resins comprising two or more species of resin chosen from the previous group can be cited.

As mixed resins of two or more species, for instance, aliphatic polyester series resin and acrylic series resin, aliphatic polyester series resin and fluorine series resin, aliphatic polyester series resin and polyolefin series resin, acrylic series resin and fluorine series resin, acrylic series resin and polyolefin series resin, fluorine series resin and polyolefin series resin, aliphatic polyester series resin and acrylic series resin and fluorine series resin, aliphatic polyester series resin and acrylic series resin and polyolefin series resin, aliphatic polyester series resin and fluorine series resin and polyolefin series resin, acrylic series resin and fluorine series resin and polyolefin series resin, and, in addition, mixed resins comprising the combination of 4 mixed species, can be cited. Among these, mixed resins comprising aliphatic polyester series resin and acrylic series resin, as well as, mixed resins comprising a combination with a resin containing at least fluorine are preferred.

When mixing two or more species of resin as described above, it is desirable to perform adjustments so that the mixing proportions of a resin containing an aliphatic polyester or a fluorine and another resin is in the range of 100: 0 to 51:49, for instance. Adjusting to such a range allows even better heat shield properties to be obtained.

In addition, when mixing two or more species of resin, the addition of compatibilizer (for instance, BONDFAST manufactured by Sumitomo Chemical Co., LTD., DYNARON manufactured by JSR Corporation, and the like) prevents decrease in dynamic physical properties, which is even more desirable.

Note that among the aforementioned resins, aliphatic polyester series resin, acrylic series resin or fluorine series resin has a higher average reflectance at wavelengths of 810nm to 2,100nm than polyolefin series resin, giving even better heat-shield effect, and are even more desirable as the base resin of the present resin composition.

Thus, as mixed resin of two or more species, for instance, mixed resins comprising a combination of aliphatic polyester series resin and acrylic series resin, aliphatic polyester series resin and fluorine series resin, acrylic series resin and fluorine series resin, aliphatic polyester series resin and acrylic series resin and fluorine series resin are preferred, among which, mixed resins comprising a combination of aliphatic polyester series resin and acrylic series resin, as well as, mixed resin comprising a combination with a resin containing at least a fluorine are particularly preferred.

(Aliphatic polyester series resin)

As aliphatic polyester series resins do not contain aromatic rings in the molecular chain, using aliphatic polyester series resin can prevent ultraviolet light absorption from occurring. Therefore, even if exposed to ultraviolet light, the sheet does not deteriorate or yellow, and the light reflection property in the infrared region is satisfactory, allowing the heat-shield effect to persist even more.

As aliphatic polyester series resins, those that have been chemically synthesized, those that have been fermentatively synthesized by a microorganism, or, mixtures thereof, can be used.
As chemically synthesized aliphatic polyester series resins, poly ε-caprolactam obtained by ring-opening polymerization of a lactone, and the like, polyethylene adipate, polyethylene azerate, polytetramethylene succinate and cyclohexane dicarboxylic acid/cyclohexane dimethanol condensation polymer obtained by polymerization of dibasic acid and a diol, and the like, lactic acid series polymer and polyglycol obtained by polymerization of hydroxy carboxylic acid, and the like, or aliphatic polyesters with a portion of the ester bonds of the previous aliphatic polyester, for instance, 50% or less of the ester bonds, substituted with amide bonds, ether bonds, urethane bonds or the like, and the like, may be cited. As aliphatic polyester series resin fermentatively synthesized by a microorganism, poly hydroxybutyrate, copolymer of hydroxybutyrate and hydroxyvalerate, and the like, may be cited.

As described above, since a small refractive index is preferable as base resin, among the aliphatic polyester series resins, lactic acid series polymers having a refractive index of less than 1.46 (generally on the order of 1.45) are particularly desirable.

As lactic acid series polymers, for instance, homopolymer of D-lactic acid or L-lactic acid, or copolymer thereof can be cited. Concretely, poly(D-lactic acid), which structural unit is D-lactic acid, poly(L-lactic acid), which structural unit is L-lactic acid, furthermore, poly(DL-lactic acid), which is a copolymer of L-lactic acid and D-lactic acid, or mixtures thereof, can be cited.

As described above, lactic acid has two species of optical isomers, that is to say, L-lactic acid and D-lactic acid, and the crystallinity is different depending on the proportion of structural units of these two species (DL ratio). For instance, a random copolymer in which the proportion of L-lactic acid and D-lactic acid is approximately 80:20 to 20:80 has low crystallinity, softens near the glass transition temperature of 60°C, and becomes a transparent, totally non-crystalline polymer. On the other hand, a random copolymer with a proportion of L-lactic acid and D-lactic acid of approximately100:0 to 80:20, or approximately 20:80 to 0:100, has the same glass transition temperature as the previous copolymer of 60°C, but has a high crystallinity.

In the present heat shield sheet, preferred are lactic acid series polymers in which the DL ratio in the lactic acid series polymer, that is to say the content ratio of D-lactic acid and L-lactic acid is D-lactic acid:L-lactic acid=100:0 to 85: 15, or D-lactic acid:L-lactic acrid=0:100 to 15:85, and lactic acid series polymers with D-lactic acid:L-lactic acid=99.5: 0.5 to 95:5, or, D-lactic acid:L-lactic acid=0.5:99.5 to 5:95 are more desirable.
Lactic acid series polymers comprising D-lactic acid or L-lactic acid only, that is to say, lactic acid series polymers in which the content ratio of D-lactic acid and L-lactic acid is 100:0 or 0:100, show extremely high crystallinity, have high melting point, and tend to have excellent heat resistance and mechanical physical properties. That is to say, when stretching or heat-treating the sheet, the resin crystallizes, increasing heat resistance and mechanical physical properties, which point is desirable.

Meanwhile, lactic acid series polymers constituted with D-lactic acid and L-lactic acid are provided with flexibility, increasing forming stability and stretch stability of the sheet, which point is desirable.
Taking into consideration the balance between heat resistance and forming stability and stretch stability of the obtained heat shield sheet, it can be stated that lactic acid series polymers in which the constitution ratio between D-lactic acid and L-lactic acid is D-lactic acid:L-factic acid=99.5:0.5 to 95:5, or, D-lactic acid:L-lactic acid=0.5:99.5 to 5:95 are more desirable.

Lactic acid series polymers can be prepared by well-known methods, such as, condensation polymerization method and ring-opening polymerization method. For instance, with the condensation polymerization method, a lactic acid series polymer having an arbitrary composition can be obtained by direct dehydration condensation polymerization of D-lactic acid, L-lactic acid, or, mixtures thereof. In addition, with the ring-opening polymerization method, a lactic acid series polymer having an arbitrary composition can be obtained by ring-opening polymerization of a lactide, which is a cyclic dimer of lactic acid, in the presence of a given catalyst, while using a polymerization adjuster, or the like, as necessary. The above lactide exists as L-lactide, which is a dimer of L-lactic acid, D-lactide, which is a dimer of D-lactic acid, and DL-lactide, which is a dimer of D-lactic acid and L-lactic acid, and a lactic acid series polymer having an arbitrary composition and crystallinity can be obtained by mixing and polymerizing these as necessary,.

Note that, lactic acid series polymers having different copolymerization ratios of D-lactic acid and L-lactic acid may be blended. In this case, it is desirable to make adjustments such that the average value of copolymerization ratio of D-lactic acid and L-lactic acid from a plurality of lactic acid series polymers fall within the range of the above-mentioned DL ratio.

In addition, a copolymer of lactic acid and another hydroxy carboxylic acid can also be used as a lactic acid series polymer. In so doing, as the "other hydroxy carboxylic acid unit" to be copolymerized, bifunctional aliphatic hydroxy carboxylic acids, such as, glycolic acid, 3-hydroxybutyric acid, 4-hydroxybutyric acid, 2-hydroxy-n-butyric acid, 2-hydroxy-3,3-dimethyl butyric acid, 2-hydroxy-3-methyl butyric acid, 2-methyl lactic acid, 2-hydroxy caproic acid and lactones, such as, caprolactone, butyrolactone and valerolactone, may be cited.

Further in addition, as necessary, the lactic acid series polymer may contain as small amount copolymerization constituent, non-aliphatic carboxylic acid similar to terephthalic acid and/or non-aliphatic diol similar to ethylene oxide adduct of bisphenol A, hydroxy carboxylic acid other than lactic acid and or lactic acid.

Lactic acid series polymers preferably have high molecular weights, and the molecular weight of a lactic acid series polymer is preferably a weight average molecular weight of 50,000 or greater, more preferably 60,000 to 400,000, among which 100,000 to 300,000 is particularly desirable. If the weight average molecular weight of the lactic acid series polymer is less than 50,000, the obtained sheet sometimes has poor mechanical physical properties.

(Acrylic series resin)

Hereinafter, acrylic series resins usable in the present embodiment will be described.

Acrylic series resins allow high reflection capability, that is to say, heat-shield capability to be obtained, owing to the fact that their refractive index is small, leading to larger differences in refractive indices with fine powdery fillers. Moreover, since acrylic series resins do not have aromatic groups, they have the characteristics of having almost no yellowing caused by deterioration of heat shield sheet by exposure to ultraviolet light, and almost no decrease of heat shield property over time.

In addition, the heat resistance of a heat shield sheet can be increased by combining an acrylic series resin with another resin. For instance, the glass transition temperature of a lactic acid series polymer is near 60°C, and the heat resistance can be increased by stretch-crystallization; heat resistance and dimensional stability can be further increased by mixing lactic acid series polymer with an acrylic series resin having high heat resistance, allowing dimension stability of heat shield sheet to be secured sufficiently under a high temperature environment of on the order of 80°C.

As acrylic series resins used in the present embodiment, methyl methacrylic resin (also referred to as PMMA: polymethylmethacrylate), the principal component of which is polymerized from methyl methacrylic acid, can be cited preferably.

Similarly to lactic acid series polymers, methyl methacrylic resin has a low refractive index of 1.49, giving a large difference in the refractive indices of acrylic series resin and fine powdery filler, allowing high reflection capability, that is to say, high heat-shield capability to be obtained.

As methyl methacrylic resins, commercially available methyl methacrylic resins, such as, SUMIPEX series manufactured by Sumitomo Chemical Co., Ltd, ACRYPET series manufactured by Mitsubishi Rayon Co., Ltd, PARAPET series manufactured by Kuraray Co., Ltd, DELPET manufactured by Asahi Kasei Corporation, and the like, can be used.

The methyl methacrylic resin is preferably copolymerized with vinyl series monomer that is copolymerizable with a methyl methacrylic acid, with the purpose of increasing the formability thereof, and in addition, with the purpose of adjusting the glass transition temperature (Tg).

As vinyl series monomers copolymerizable with a methyl methacrylic acid, for instance, methacrylic acid esters, such as, ethyl methacrylate, butyl methacrylate, cyclohexyl methacrylate, phenyl methacrylate, benzyl methacrylate, 2-ethyl hexyl methacrylate and 2-hydroxyethyl methacrylate, acrylic acid esters, such as, methyl acrylate, ethyl acrylate, butyl acrylate, cyclohexyl acrylate, phenyl acrylate, benzyl acrylate, 2-ethyl hexyl acrylate and 2-hydroxyethyl acrylate, unsaturated fatty acids, such as, acrylic acid and methacrylic acid, styrene, $\alpha$-methyl styrene, acrylonitrile, methacrylonitrile, maleic anhydride, phenyl maleimide, cyclohexyl maleimide, and the like, can be cited, among which, acrylic acid esters are preferred.

The glass transition temperature (Tg) may be 90°C or higher, and in addition, Tg may be less than 90°C, for the acrylic series resins used in the present embodiment, which can be selected optimally and used according to each application. That is to say, an acrylic series resin having a Tg of 90°C or higher, when mixed with another resin, for instance, a lactic acid series polymer or the like, to prepare a resin composition, allows the heat resistance of a heat shield sheet to be increased.

In addition, an acrylic series resin having a Tg of less than 90°C, in particular less than 60°C, among which in particular less than 50°C, when mixed with another resin, allows stretch-membrane forming to be carried out at a lower temperature when stretch-membrane forming a sheet. As a result of this, formation of internal void is promoted, allowing the reflection capability, that is to say, heat-shield capability, of the obtained heat shield sheet, to be increased further.

In particular, since fluorine series resins, and the like, inherently have excellent heat resistance, mixing them with an acrylic series resin having a low Tg is in this way is useful.

Note that the above glass transition temperature (Tg) corresponds to the peak temperature of loss elastic modulus (E") in viscoelasticity measurement, and is a temperature defined by the peak temperature. The slope of the temperature dependency curve of loss elastic modulus measured under given conditions using, for instance, a viscoelasticity spectrometer, is determined and the peak temperature of loss elastic modulus (E") in viscoelasticity measurement is the temperature where this slope is zero (first order derivative is zero).

The Tg of an acrylic series resin can be adjusted by a copolymerization constituent as described above.

The MFR (melt flow rate) of the acrylic series resins used in the present embodiment is preferably 5 to 35 (5g/10 minute to 35g/10 minute), among which 10 to 30 (10g/10 minute to 30g/10 minute) is more desirable.

Note that, herein, the values of MFR are values that have been measured according to JIS K-721 0 (or ASTM D-1238), under the conditions: 230°C, 37.3N load and 10 minutes.

The molecular weight of the acrylic series resin is preferably 10,000 to 150,000 approximately and in particular 60,000 to 150,000, which can be obtained by suspension polymerization method and aggregated polymerization method. If the molecular weight is on this order, sheet molding process can be performed satisfactorily.

Note that, a (flexible) elastomer constituent may be blended into the acrylic series resin, in a range such that the refractive index does not become 1.52 or greater. Generally, blending a (flexible) elastomer constituent into an acrylic series resin allows resistance to breakage to be increased, and furthermore, also allows stretchability to be improved.

The (flexible) elastomer constituents have no particular limitation, as long as the refractive index of the acrylic series resin does not become 1.52 or greater, and they have no aromatic ring. As particularly preferred ones, acrylic series rubbers and aliphatic polyesters can be given as examples.

As one example of acrylic series rubber, acrylic series rubber in which methyl methacrylate, styrene, or acrylonitrile, or the like, were graft polymerized onto a crosslinked alkyl (meta)acrylate rubber polymer comprising an alkyl (meta)acrylate that does not contain a double bond and a crosslinker, can be cited.

As alkyl (meta)acrylate, for instance, alkyl acrylates, such as, methyl acrylate, ethyl acrylate, n-propyl acrylate, n-butyl acrylate, 2-ethyl hexyl acrylate, ethoxy ethoxy ethyl acrylate, methoxy tripropylene glycol acrylate and 4-hydroxy butyl acrylate, and alkyl methacrylates, such as, hexyl methacrylate, 2-ethyl hexyl methacrylate, lauryl methacrylate, tridecyl methacrylate and stearyl methacrylate can be cited.

In addition, aliphatic polyesters in particular with a glass transition temperature below 0°C, and more preferably below -20°C, are adequate aliphatic polyesters as (flexible) elastomer constituents. Aliphatic polyesters having a glass transition temperature of below 0°C have the functions of a (flexible series) elastomer character, allowing resistance to breakage to be provided suitably.

As aliphatic polyesters having a glass transition temperature of below 0°C, BIONOLLE 3000 series manufactured by SHOWA HIGHPOLYMER CO., LTD., GS-Pla manufactured by Mitsubishi Chemical Corporation, and the like, can be given as examples.

(Fluorine series resin)

Fluorine series resins are particularly desirable as base resin used in the present embodiment, as the heat resistance is high, and moreover, the refractive index is extremely low.

Resins containing a fluorine atom in the molecular structure and having a refractive index of less than 1.52 is adequate as fluorine series resins.

As fluorine series resin, a variety of different ones may be cited depending on the number of fluorine atoms contained in the resin and the polymerization method. For instance, tetrafluoroethylene resin (PTFE), tetrafluoroethylene-perfluoro alkylvinylether copolymer resin (PFA), tetrafluoroethylene-hexafluoropropylene copolymer resin (FEP), ethylene tetrafluoroethylene copolymer resin (ETFE), vinylidene fluoride resin (PVDF), chloro trifluoroethylene (PCTFE), polyvinyl fluoride (PCF), ethylene-chloro trifluoroethylene resin (ECTFE), tetrafluoroethylene-hexafluoropropylene-vinylidene fluoride terpolymer resin (THV), tetrafluoroethylene-perfluoro dimethyl dioxol copolymer resin (TFE/EDD), and the like, may be cited.

Among these, tetrafluoroethylene-hexafluoropropylene copolymer resin (FEP) having a refractive index of 1.34, tetrafluoroethylene-hexafluoropropylene-vinylidene fluoride terpolymer resin (THV) having a refractive index of 1.36, ethylene tetrafluoroethylene copolymer resin (ETFE) having a refractive index of 1.40, which are also melt-knead extrudable, are particularly desirable.

Note that the copolymer with another resin may be applicable, as long as the refractive index is less than 1.52.

(Polyolefin series resin)

As polyolefin series resins, those having as principal component monoolefin polymers such as polyethylene and polypropylene, and copolymers thereof, and the like, may be cited. As concrete examples, polyethylene series resins, such as, low density polyethylenes, linear low density polyethylenes (ethylene-α-olefin copolymers), medium density polyethylene and high density polyethylene, polypropylene series resins, such as, polypropylene and ethylene-polypropylene copolymers, poly 4-methyl pentene, polybutene, ethylene- vinyl acetate copolymers, and mixtures thereof, and the like, can be cited.

These polyolefin series resins include those prepared using a multi-site catalyst similar to Ziegler catalyst, and those prepared using a single-site catalyst similar to metallocene catalyst.

Among these, linear low density polyethylene resins, such as, ethylene-α-olefin copolymer, polypropylene series resins, and ethylene-propylene copolymers are particularly desirable, when formability into sheet, heat resistance of the obtained sheet, and the like, are taken into consideration.

These polyolefin series resins may be used alone, or two or more species may be mixed and used.

In addition, when formability, stretchability, and the like, of the sheet are taken into consideration, the melt index of the polyolefin series resin is preferably on the order of 0.2 to 3g/10min (190°C, 2.16kg load) in the case of a polyethylene series resin, on the order of 0.5 to 30g/10min (230°C, 2.16kg load) in the case of a polypropylene series resin, and on the order of 10 to 70g/10min (260°C, 5.0kg load) in the case of a poly 4-methyl pentene series resin.

The melt indices herein are those measured based on methods defined in ASTM D-1238. However, the measurements are those measured under the respective conditions indicated in parentheses.

Note that the above-mentioned polypropylene series resins include propylene homopolymers, or, copolymers of propylene and α-olefin such as ethylene and hexene, or mixtures of homopolymer thereof.

Among these, from the viewpoint of securing heat dimensionality (stability), polypropylene (homopolymer) having high crystallinity among the above-mentioned polypropylene series resins are particularly desirable.

The melt flow rate (MFR: JISK7210, 230°C measurement temperature, 21.18N load) of the polypropylene series resin is preferably 0.50 to 30g/10min, and more preferably 1.0 to 20g/10min. If the melt flow rate of the polypropylene series resin is too small, the extrusion temperature must be high at melt-forming. As a result, the reflectance sometimes decreases, by yellowing due to oxidation of the polypropylene series resin itself and heat deterioration of titanium oxide. On the other hand, if the melt flow rate of the polypropylene series resin is too large, sheet fabrication by melt-forming sometimes becomes unstable.

As polymerization methods for obtaining polypropylene series resin, well-known methods may be cited, such as, for instance, solvent polymerization method, bulk polymerization method and gas phase polymerization method. In addition, as polymerization catalysts, well-known catalysts can be cited, such as, for instance, titanium trichloride type catalysts, magnesium chloride-supported type catalysts and metallocene series catalysts.

<Fine powdery filler>

As fine powdery filler used in the present heat shield sheet, organic fine powder, mineral fine powder, and the like, may be cited.

(Organic fine powder)

Using as organic fine powder at least one species chosen from cellulose series powders, such as, wood powder and pulp powder, polymer beads, polymer hollow particles, and the like, is desirable.

(Mineral fine powder)

Using as mineral fine powder at least one species chosen from calcium carbonate, magnesium carbonate, barium carbonate, magnesium sulfate, barium sulfate, calcium sulfate, zinc oxide, magnesium oxide, calcium oxide, titanium oxide, alumina, aluminum hydroxide, hydroxyapatite, silica, mica, talc, kaolin, clay, glass powder, asbestos powder, zeolite, clay silicate, and the like, is desirable.

Among these, using a mineral fine powder having a large refractive index is desirable, from the viewpoints that the difference in refractive index with the base resin is large and that an excellent heat-shield capability can be obtained. Concretely, calcium carbonate, barium sulfate, titanium oxide, zinc oxide and the like, which have refractive indices of 1.6 or greater, can be cited. Among these, titanium oxide, which has a refractive index of 2.5 or greater, is particularly desirable.

Note that, when the long term durability of the obtained sheet is taken into consideration, it can be stated that barium sulfate, which is stable against acids and alkali, is also particularly desirable.

Compared to other mineral fine powders, titanium oxide has a remarkably high refractive index, allowing the difference in refractive indices with the base resin to be remarkably large, such that with a lesser mixing quantity than when other fillers are used, the sheet can be provided with high reflection capability and low optical transparency. In addition, using titanium oxide, a heat shield sheet can be obtained, having high heat-shield capability even if the thickness of the sheet is thin.

As titanium oxide, titanium oxide in crystal form similar to anatase type and rutile type is desirable. From the viewpoint that the difference in refractive indices with the base resin is large, titanium oxide having a refractive index of 2.7 or greater is desirable, and from this point of view, using titanium oxide in the rutile type crystal form is desirable.

In order to increase the heat shield property of a sheet, using titanium oxide, which has low light absorption capability with respect to visible radiation, is desirable. In order to decrease the visible light absorption capability of titanium oxide, it is desirable that the quantity of impurity elements, such as, coloring elements, contained in titanium oxide, is small. Among these, from the point of heat shield property, titanium oxides with niobium contents of 10ppm or less are preferred, and among these, titanium oxides having vanadium contents of 5ppm or less are preferred.

Note that, from the viewpoint of decreasing light absorption capability, it is also desirable that there are little coloring elements, such as, iron, copper and manganese, contained in titanium oxide.

To obtain titanium oxide in which the quantity of impurity elements is small as mentioned above, it is desirable to prepare titanium oxide, for instance, by the chlorine method process.

In a chlorine method process, a rutile mineral having titanium oxide as principal component is reacted with a chlorine gas at on the order of 1,000°C in a high temperature oven to generate titanium tetrachloride, then, this titanium tetrachloride is combusted in oxygen atmosphere, allowing a highly pure titanium oxide to be obtained. Note that, while there is also the sulfuric acid method process as an industrial preparation method for titanium oxide, titanium oxide obtained by this method ends up containing large amounts of coloring elements, such as, vanadium, iron, copper, manganese and niobium.

The preferred titanium oxides used as fine powdery fillers are those with the surface thereof coated with an inert inorganic oxide, that is to say, those provided with an inorganic oxide surface treatment layer. Coating the surface of titanium oxide with an inert inorganic oxide allows the photocatalytic activity of titanium oxide to be suppressed and light resistance of the sheet to be increased, in addition to allowing moisture adsorption of titanium oxide in the coating step to be prevented and aggregation of titanium oxide particles to be prevented, and allowing dispersability to be increased.

As inert inorganic oxides used for coating, alumina, or silica formed by the gas phase method are preferably used. Coating titanium oxide surface in this way with alumina or silica formed by the gas phase method, allows the above-mentioned effects to be obtained without compromising the high light reflectivity of titanium oxide.

Herein, as the above-mentioned gas phase method (dry method) of silica, method by high temperature gas phase hydrolysis of silicon halide method (flame hydrolysis method), whereby silica sand and coke are heat reduced and gasified by an arc in an electric oven and this is oxidized by air (arc method), and the like, may be cited. For instance, as flame hydrolysis methods, methods whereby silicon tetrachloride is combusted together with hydrogen and oxygen to prepare silica, methods whereby instead of the silicon tetrachloride, silanes, such as, methyltrichlorosilane and trichloro silane are used alone, or mixed with silicon tetrachloride to prepare silica, may be cited.

As titanium oxide with the surface coated by silica formed by the gas phase method, for instance, Ti-Pure manufactured by Du Pont may be cited.

The surface treatment amount of inert inorganic oxide coated on the surface of titanium oxide, in other words, the amount of inorganic oxide surface treatment layer, is preferably 1 mass% to 5 mass% of the total mass of the titanium oxide after surface treatment. If the surface treatment amount of the inert inorganic oxide coated on the surface of titanium oxide is 1 mass% or greater, a suppression effect on the photocatalytic activity of titanium oxide is obtained. In addition, if the surface treatment amount of the inert inorganic oxide is 5 mass% or less, dispersability into the resin becomes satisfactory, allowing a homogeneous sheet to be obtained.

Note that "surface treatment amount" is the proportion (indicated by a percentage) in the total mass of titanium oxide after surface treatment occupied by the total mass of treatment agent used for surface treatment (for instance, inert inorganic oxide or organic compound). *Idem* hereinafter.

In order to increase dispersability into base resin, and the like, those titanium oxide with the surface of titanium oxide surface treated with at least one species of organic compound chosen from the group comprising siloxane compound, silane coupling agent, multivalent alcohol, titanium coupling agent, alkanol amine or a derivative thereof, and, higher fatty acid or a metal salt thereof, and the like, that is to say, provided with an organic compound surface treatment layer, are desirable.

These organic compounds, by physically adsorbing to and chemically reacting with hydroxyl groups on the titanium oxide surface, allow the hydrophobization, dispersability, and, affinity for the base resin, of the titanium oxide to be increased.

Note that, in present embodiment, the above-mentioned organic compounds may be used alone, or two or more species may be used in combination. In the present embodiment, using a silane coupling agent and/or a multivalent alcohol as organic compound is particularly desirable.

As the above silane coupling agents, for instance, alkoxy silanes having an alkyl group, an alkenyl group, an amino group, an aryl group, an epoxy group, or the like, chloro silanes, polyalkoxy alkyl siloxanes and the like, are desirable, and aminosilane coupling agents are more desirable.

As concrete examples of silane coupling agent, for instance, aminosilane coupling agents, such as, n-β(aminoethyl)-γ-aminopropyl methyl dimethoxy silane, n-β(aminoethyl)-γ-aminopropyl methyl trimethoxy silane, n-β(aminoethyl)-γ-aminopropyl methyl triethoxy silane, γ-aminopropyl triethoxy silane, γ-aminopropyl trimethoxy silane and n-phenyl-γ-aminopropyl trimethoxy silane, alkyl silane coupling agents, such as, dimethyl dimethoxy silane, methyl trimethoxy silane, ethyl trimethoxy silane, propyl trimethoxy silane, n-butyl trimethoxy silane, n-butyl triethoxy silane, n-butyl methyl dimethoxy silane, n-butyl methyl diethoxy silane, isobutyl trimethoxy silane, isobutyl triethoxy silane, isobutyl methyl dimethoxy silane, tert-butyl trimethoxy silane, tert-butyl triethoxy silane, tert-butyl methyl dimethoxy silane and tert-butyl methyl diethoxy silane, and the like, can be cited. These silane coupling agents may be used alone, or two or more species may be combined and used.

As concrete examples of the above multivalent alcohols, for instance, trimethylol ethane, trimethylol propane, tripropanol ethane, pentaerythritol, and the like may be given as desirable ones. Among these, trimethylol ethane or trimethylol propane is used more preferably. These multivalent alcohols may be used alone, or two or more species may be combined and used.

The surface treatment amount of the above-mentioned organic compound coating the surface of titanium oxide, in other words, the amount of organic compound surface treatment layer, is preferably 0.01 mass% to 5 mass% of the total mass of titanium oxide after surface treatment.

If the surface treatment amount of the organic compound is 0.01 mass% or greater, moisture adsorption of titanium oxide can be prevented and aggregation of titanium oxide particles hindered, allowing dispersability of titanium oxide to be increased. If dispersability of titanium oxide is increased, sufficient area of the interface between the base resin and titanium oxide is secured, allowing the sheet to be provided with higher heat-shield capability. On the other hand, if the surface treatment amount of the organic compound is 5 mass% or less, lubricity of titanium oxide particle becomes appropriate, enabling stable extrusion and membrane fabrication.

Consequently, as titanium oxides used as fine powdery fillers, those provided with an inorganic oxide surface treatment layer that has been surface treated with alumina or silica formed by the gas phase method, and an organic compound surface treatment layer that has been surface treated with at least one species of organic compound chosen from the group comprising a siloxane compound, a silane coupling agent, a multivalent alcohol, a titanium coupling agent, an alkanol amine or a derivative thereof, and, a higher fatty acid or a metal salt thereof, and the like, are desirable, and moreover, it can be stated that those with an amount of inorganic oxide surface treatment layer of 1 to 5 mass% of the total mass of titanium oxide after surface treatment, and an amount of organic compound surface treatment layer of 0.01 to 5 mass% of the total mass of titanium oxide after surface treatment are more desirable.

The average particle size (D50) of titanium oxide is preferably 0.1 $\mu$m to 1 $\mu$m, and more preferably 0.2$\mu$m to 0.5$\mu$m.

If the particle size of titanium oxide is 0.1 $\mu$m or greater, there is little occurrence of secondary aggregation, and dispersability into base resin is satisfactory, and in addition, if the particle size is 1 $\mu$m or smaller, as the particle size is small, smooth external appearance and dynamic physical properties are easier to obtain.

Note that, when using a fine powdery filler other than titanium oxide, surface treatment may also be carried out with an inert inorganic oxide and an organic compound, similarly to titanium oxide, as described above.

In addition, for the size of the fine powdery filler other than titanium oxide, those with an average particle size of 0.05$\mu$m to 15$\mu$m are preferred, and those that are 0.1 $\mu$m to 10$\mu$m are more desirable. If the average particle size of the fine powdery filler is 0.05$\mu$m or larger, light scattering reflection is generated concomitantly to sheet surface roughening, such that reflective directionality of the obtained sheet becomes smaller. In addiction, if the average particle size of the fine powdery filler is 15 $\mu$m or less, the interface between the base resin and the fine powdery filler is formed more tightly, allowing the sheet to be provided with even better heat shield property.

Taking into consideration the heat shield property, mechanical physical properties, productivity and the like, of the sheet, the content in fine powdery filler in the resin composition is preferably 10 mass% to 60 mass% of the resin composition, particularly preferably 10 mass% to 55 mass%, among which 20 mass% to 45 mass% is more desirable. If the content in fine powdery filler is 10 mass% or greater, sufficient area of the interface between the base resin and the fine powdery filler can be secured, allowing the sheet to be provided with even higher heat shield property. In addition, if the content in fine powdery filler is 60 mass% or less, dynamic physical properties necessary for the sheet can be secured.

<Other constituents>

The present resin composition may contain other resins and other additives, to the extent that the function of the principal component is not impeded. For instance, hydrolysis prevention agent, oxidation inhibitor, light stabilizer, heat stabilizer, lubricant, dispersant, ultraviolet light absorbent, white pigment, fluorescent whitening agent, and, other additives agents, may be contained.

(Internal void)

The present heat shield sheet may have voids inside the sheet. The heat shield property can be further increased by the voids inside the sheet.

Note that, using titanium oxide, and in particular, titanium oxide having a niobium content of 105ppm or less and a vanadium content of 5ppm or less, high reflection capability can be obtained even if there is little porosity present inside the sheet, excellent heat-shield effect can be obtained, and at the same time, mechanical properties can be increased.

That is to say, as the refractive index of titanium oxide is high, the opacifying power is high, such that the amount of filler used can be decreased, allowing the number of voids formed by stretching to be decreased, thereby allowing a decrease in mechanical properties due to the presence of the void to be prevented, and mechanical properties of the sheet can be increased while maintaining high heat-shield capability. In addition, even when the amount of titanium oxide used is large, as the number of voids can be decreased by decreasing the amount of stretching, mechanical properties can be increased, similarly to when the amount of filler (titanium oxide) used is decreased. In this way decreasing the number of voids present inside the sheet is advantageous also from the point of increasing dimensional stability of the sheet.

(Constitution)

The present heat shield sheet may be a monolayer sheet comprising the present resin composition, or, if the effects of the action of the monolayer sheet are not impeded, may be a constitution in which, another layer, for instance, a metal thin film layer, is provided on one side or both sides of the heat-shield layer comprising the present resin composition. For instance, the constitution may comprise a metal thin film layer and a protective layer sequentially formed on the back surface side of the heat-shield layer, that is to say, on the surface on the side opposite to the side that receives light.

Note that, the representation "heat shield sheet" includes those having a metal thin film layer.

Giving examples of layer constitution of the present heat shield sheet, the layer constitution heat-shield layer/ (as necessary, anchor coat layer)/metal thin film layer/protective layer, or, a layer constitution, such as heat-shield layer/ intermediate layer/(as necessary, anchor coat layer)/metal thin film layer/protective layer, may be cited.

However, the heat-shield layer may be situated on the side that is illuminated by light. In addition, the present heat shield sheet may have yet another layer between these layers.

In addition, each layer of heat-shield layer, intermediate layer, metal thin film layer, protective layer, and the like, may independently be constituted by several layers.

The above-mentioned metal thin film layer can be formed by the metal vapor deposition method. For instance, it can be formed by vacuum deposition method, ionization vapor deposition method, sputtering method, ion plating method, and the like. As long as the material has high reflectance, it can be used with no particular limitation as metal material to be vapor deposited, and in general, silver, aluminum, and the like, are used preferably, among these, silver is used particularly preferably.

The metal thin film layer may be a metal monolayer or laminate, or, a metal oxide monolayer or laminate. In addition, it may be a laminate of two or more layers of metal monolayer and metal oxide monolayer.

Although the thickness of the metal thin film layer differs depending on the material forming the layer and also the layer formation method, and the like, in general, it is preferably in the range of 10nm to 300nm, and more preferably in the range of 20nm to 200nm. If the thickness of the metal thin film layer is 10nm or greater, sufficient reflectance can be obtained. On the other hand, if the thickness of the metal thin film layer is 300 nm or less, production efficiency is good, which is desirable.

In order to protect the metal thin film layer, it is desirable to provide a protective layer on the back side of the metal thin film layer, that is to say, on the side that is opposite to the surface that receives light.

The material forming the protective layer can be used with no particular limitation as long as corrosion of the metal thin film layer can be prevented and close adherence with the metal thin film layer is satisfactory. For instance, a coat comprising any of a thermoplastic resin, a thermosetting resin, an electron beam curable resin, an ultraviolet light curable resin, and the like, can be used. Concretely, resin coat comprising amino series resin, aminoalkyd series resin, acrylic series resin, styrene series resin, acrylic-styrene copolymer, urea-melamine series resin, epoxy series resin, fluorine series resin, polycarbonate, nitrocellulose, cellulose acetate, alkyd series resin, rhodine modified maleic acid resin, polyamide series resin and the like, alone, or, mixtures thereof, can be used.

In addition, those resin coat with plasticizer, stabilizer, ultraviolet light absorbent, or the like, added to these resin coats as necessary, can also be used.

The protective layer can be formed by coating with the above-mentioned coat diluted as necessary with a suitable solvent. For instance, the entire surface of the metal thin film layer, by a conventional coating method, such as, gravure coating method, roll coating method and dip coating method, and then drying (curing in the case of a curable resin). Or, the protective layer may be formed by methods other than the methods coating a coat. In addition, a protective layer can also be formed by methods whereby a sheet comprising a formed protective layer is pasted, methods whereby a protective layer is vapor deposited, and method whereby a protective layer is sputtered.

Note that, as solvent, the same ones as those used conventionally for coating can be used.

The thickness of the protective layer is not limited in particular. If the protective layer is formed by using a coat, it is preferably in the range of 0.5 to 5$\mu$m in general. If the thickness of the protective layer is 0.5$\mu$m or greater, the surface of the metal thin film layer can be coated homogeneously, exerting the effect of forming the protective layer sufficiently.

The metal thin film layer may be formed over the heat shield sheet by metal vapor deposition; a laminate may be fabricated beforehand, where a metal thin film layer is formed on an intermediate layer or a temporary support separator comprising a synthetic resin film or the like, and this laminate be laminated with the heat shield sheet.

The lamination method can be done by simply superposing, or, by superposing and adhering partially or over the entire surface, the metal thin film layer and the heat shield sheet of the fabricated laminate, or, the intermediate layer and the heat shield sheet of the fabricated laminate. As adhesion methods, methods of adhesion by well-known methods using various adhesives, methods of laminating using well-known heat adhesion methods or the like, and the like, may be cited. In the present embodiment, methods of adhesion without applying heat, or, methods of heat adhesion at a temperature of 210°C or less are adopted preferably. In this way, the voids inside the heat shield sheet are retained, and high reflectance is maintained.

In addition, an anchor coat layer may be provided between the heat-shield layer comprising the present resin composition and the above-mentioned metal thin film layer.

However, when there is an intermediate layer, it is desirable to provide an anchor coat layer between the intermediate layer and the metal thin film layer. A coat comprising, for instance, thermoplastic resin, thermosetting resin, electron beam curable resin, ultraviolet light curable resin, or the like, can be used for the forming the anchor coat layer.

(Reflectance)

Owing to the refractive scattering at the interface between the base resin and the fine powdery filler, the present heat shield sheet allows the average reflectance at wavelengths of 810nm to 2,100nm to be increased to 80% or greater, preferably 85% or greater, among which preferably to 88% or greater.

In this way, the present heat shield sheet has particularly excellent reflectance in the infrared region of 810nm to 2,100nm wavelengths, reflects radiation energy from sunlight, various lamps, and the like, can prevent temperature increase due to heat conduction, allowing an excellent heat shield property to be realized.

(Application)

Using excellent heat shield property in this way, the present heat shield sheet allows a variety of heat shield materials to be constituted, for instance, by processing, forming or pasting the present heat shield sheet to a substrate comprising plastic, glass, wood, metal, or the like. Concretely, for instance, a heat shield material used to prevent temperature increase due to light beam, such as, an exterior material constituting a roof, a window, an outer wall, or the like, of buildings and constitutions, an exterior material constituting a window or a body of a vehicle, such as, an automobile, an aircraft or a ship, a back sheet used in a solar battery, or the like, a partition panel, a blind, a curtain, a tent material, an infrared radiation reflection film for agricultural use, cover for preventing increase of automobile-bus in-vehicle temperature, and the like, can be constituted.

Among them, not only does the present heat shield sheet have excellent heat shield property, as it can be formed thinly, it is particularly appropriate in applications where heat shield property together with thin thickness are sought, such as, for instance, the back sheet of a solar battery.

Herein, the back sheet of a solar battery (referred to "back sheet for solar battery") will be described.

As solar battery, types such as silicon type (single crystal, multi-crystal and amorphous), compound type, and dye sensitized type exist, and from the point of electricity generation costs, silicon type solar batteries are used in large numbers.

In these solar batteries, a light reflector for solar battery referred to as back sheet is used, and the solar battery is constituted by, for instance, glass/sealing material/solar battery cell/sealing material/back sheet.

The back sheet increases electricity generation efficiency by reflecting sunlight that was transmitted through a solar battery cell or was not transmitted through a solar battery cell. Therefore, as back sheet for solar battery, preferred are those capable of extracting photoelectrically convertible sunlight wavelength only, and prevent heating of the solar battery cell.

When the incident sunlight is absorbed by the back sheet, the temperature of the cell itself increases, increasing resistance, and as a result, electricity generation efficiency decreases. However, if the present heat shield sheet is used in the back sheet for solar battery, as it reflects with good efficiency the light beam in the infrared region, the temperature of the cell itself does not increase and the electricity generation efficiency does not drop, which point is desirable.

(Preparation method)

Hereinafter, one example of preparation method of the present heat shield sheet will be described; however, the present invention is not limited in any way to the preparation method described below.

First, respective given amounts of fine powdery filler, other additives, and the like, are mixed to the base resin to prepare a resin composition.
Concretely, fine powdery filler, furthermore, as necessary, hydrolysis prevention agent, other additives, and the like, are added to the base resin, kneaded with a ribbon blender, a tumbler, a Henschel mixer, or the like, then, using a Banbury mixer, a uniaxial or a biaxial extruder, or the like, heated to a temperature of the melting point of the base resin or above (for instance, in the case of a lactic acid series polymer, at 170°C to 230°C) and melted, as necessary, a liquid additive is further added by liquid addition from a vent groove or an injection groove in the middle of the extruder, and the resulting melt is extruded to prepare a resin composition.

However, the liquid additive may also be mixed beforehand in the base resin. In addition, the resin composition may be prepared by adding given amounts of base resin, fine powdery filler, hydrolysis prevention agent, and the like with separate feeders, or the like, beforehand. In addition, a so-called master batch, which is high concentrations of fine powdery filler, other additives, and the like, mixed in the base resin, may be prepared beforehand, and this master batch and the base resin mixed to prepare a resin composition with the desired concentration.

Next, the resin composition obtained as above is melted and extruded into sheet shape with an extruder. For instance, after drying the resin composition, each is fed to the extruder, and melted by heating at the temperature of the melting point of the resin or higher. In so doing, the resin composition may each be fed to the extruder without drying; or when not drying, it is desirable to use a vacuum vent when melt-extruding.
Extrusion temperature must be set taking into account such facts as the molecular weight decreases due to decomposition; for instance, extrusion temperature is preferably set in the range of 170°C to 230°C, in the case of a lactic acid series polymer. Thereafter, the molten resin composition is extruded from the slit-shaped outlet of a T-die and solidified by tight contact with a cooling roll to form a cast sheet.

The present heat shield sheet can display sufficient reflectance depending on the ingredient constitution; even better reflectance can be obtained by rigorously adjusting the kneading and extrusion conditions in the above preparation method. That is to say, higher reflectance can be obtained by adjusting the resin temperature (measured at the outlet base) of the knead resin when the base resin and a microparticle filler such as titanium oxide are kneaded and extruded to a given temperature range.

Concretely, reflectance can be further increased by extruding and sheet forming under temperature conditions where the resin temperature of the knead resin measured by a contact thermometer in the outlet base is 230°C or less, more preferably 210°C or less, among which 200°C or less is preferred. Although no clear reason has been found for this cause, it is speculated that maybe this is due to the fact that by holding the resin temperature at knead time to 230°C or less, not only heat deterioration of the resin itself is decreased, but also deterioration of the microsphere filler, such as, titanium oxide, and concretely, deterioration of the surface treated portion in particular can be kept low. In particular, it is speculated that maybe when a microparticle filler that underwent a variety of surface treatments, for instance, a microparticle filler coated with inorganic compound comprising alumina, silica, zirconia, or the like, and organic compound comprising silicon series compound, multivalent alcohol series compound, amine series compound, fatty acid, fatty acid ester, siloxane compound, silane coupling agent, polyol and polyethyleneglycol, or the like, is used in order to increase dispersability, this surface treated portion is affected by the temperature conditions during extruding the resin composition, deterioration and decomposition occur, therefore, heat shield property of the heat shield sheet decreases under temperature conditions higher than 230°C.

Note that, the lower limit of the resin temperature of the extruded knead resin is not limited in particular, and it is desirable to select it based on the type or the like of the base resin used. Although it also depends on the melting point, molten viscosity and the like of the resin, in general, it is preferably the melting point of the knead resin +20°C or higher. For instance, when a lactic acid series polymer is used as a base resin, although the melting point of the resin varies depending on the constitution ratio of the D-lactic acid and L-lactic acid, since it is approximately on the order of 150 to 160°C, the resin temperature of the knead resin measured by a contact thermometer in the outlet base is preferably set to 170°C or higher, and more preferably set to 180°C or higher. If lower than the melting point of the knead resin +20°C, the possibility of insufficient kneading becomes high, and as a result, sometimes the microparticle filler is badly dispersed and forming homogeneous sheet becomes difficult.

As methods for controlling the resin temperature, the method of controlling with the extruder setting temperature, the method of lowering the molten viscosity to limit shear heat generation inside the extruder, and the like, exist.

It is speculated that, similarly to the present heat shield sheet, by adding a liquid additive, such as, paraffin series process oil and plasticizer, shear heat generation is limited, allowing heat deterioration of the resin itself and deterioration of microsphere filler, such as, titanium oxide, to be limited, enabling even further increase of heat-shield capability to be intended.

In the present embodiment, the extrusion membrane formed sheet is preferably stretched 1.1-fold or more in at least one axial direction. By stretching, voids with fine powdery filler as the core are formed inside the sheet, allowing the heat shield property of the sheet to be further increased. This is believed to be due to the fact that, if stretching is carried out at a stretch temperature that is appropriate for the base resin, the base resin that is to be the matrix becomes stretched, and in so doing, the fine powdery filler attempts to remain in the same state, and as the stretch behaviors of the base resin and the fine powdery filler are different at stretching, a new interface between the base resin and the fine powdery filler is formed, and the heat shield property further increases with the effect of the refractive scattering occurring at this new interface.

However, the extrusion membrane formed sheet is preferably stretched in two axial directions rather than in one axial direction. By biaxially stretching, even higher porosity can be obtained, allowing the heat shield property of the sheet to be further increased. In addition, if the sheet is stretched only uniaxially, the formed void has only a fiber morphology stretched in one direction, but by biaxially stretching, this void adopts a disc morphology stretched in both vertical and horizontal directions. That is to say, by biaxially stretching, the detached area of the interface between the base resin and the fine powdery filler increases, promoting whitening of the sheet, and as a result, allows the heat shield property of the sheet to be increased even further. Moreover, if biaxially stretched, anisotropy disappears from the shrinking direction of the sheet, allowing the heat resistance of the heat shield sheet to be increased, and furthermore, allowing mechanical strength to be also increased.

Note that the stretching order for biaxial stretching is not limited in particular. For instance, it does not matter whether it is simultaneous biaxial stretching or successive stretching. After molten membrane forming using a stretching equipment, stretching may be along MD (sheet drawing direction) by roll stretching, and then stretching along TD (orthogonal direction to the previous MD) by tenter stretching, or biaxial stretching may be carried out by tubular stretching, or the like.

As stretching ratio, stretching 5-fold or greater as area ratio is desirable and stretching 7-fold or greater is more desirable. By stretching 5-fold or greater in area ratio, a porosity of 5% or greater can be realized. In addition, by stretching 7-fold or greater, a porosity of 20% or greater can be realized, and by stretching 7.5-fold or greater, a porosity of 30% or greater can also be realized.

The stretch temperature when stretching a cast sheet is preferably set to a range of on the order of the glass transition temperature (Tg) of the base resin or above, to the Tg +50°C or less. For instance, if the resin is a lactic acid series polymer, it is preferably set to 50°C to 90°C. If the stretch temperature is 50°C or higher, the sheet does not break at stretching, and if 90°C or less, stretch orientation becomes high, and as a result, the porosity increases, allowing a high reflectance, that is to say, a heat shield property, to be obtained.

' In addition, in the present heat shield sheet, in order to provide the sheet with heat resistance and dimension stability, it is desirable to carry out heat treatment (also referred to as heat stabilization) after stretching. The processing temperature for heat stabilizing the sheet is preferably 90 to 160°C, and more preferably 110 to 140°C. The processing time for the heat treatment is preferably one second to 5 minutes. In addition, although there is no particular limitation on the stretch equipment or the like, tenter stretching, which allows heat processing to be carried out after stretching, is carried out preferably.

[Examples]

Showing examples hereinafter, the present invention will be described more concretely; the present invention is not limited to these, and a variety of applications are possible in a scope that does not depart from the technical teachings of the present invention. Note that the measurement and evaluations shown in the examples were carried out as described below.

(Measurement and evaluation method)

(1) Average reflectance

An integration sphere was mounted on a spectrophotometer ("U-4000", manufactured by Hitachi Co., Ltd.), and the reflectance to light at wavelengths of 810nm to 2,100nm was measured every 1 nm, and the average reflectance thereof was measured by the said spectrophotometer. Note that prior to the measurements, the spectrophotometer was set so that the reflectance of alumina white plate was 100%.

(2) Heat shield property

Using a 0.5mm thick color steel plate (brown), cubic box having a side of 30cm was made. At 80cm above this cubic box, a halogen heater (960W manufactured by Sanyo Co.,Ltd.) was secured so that heat ray radiation is carried out vertically, heat beam was irradiated, and the ascending temperature was measured after one hour. Next, a heat shield sheet was cut-out into a square of having a side of 30cm, pasted on the ceiling face of the box with a double-sided tape, the ascending temperature was measured similar to above-mentioned, and the heat shield property was determined by the following formula:

$$\text{heat shield property (°C)} = (\text{ascending temperature in the absence of heat shield sheet}) - (\text{ascending temperature in the presence of heat shield sheet})$$

(3) Refractive index

The refractive index was measured based on the A method of JIS K-7142.

(4) Niobium content in titanium oxide (ppm)

The niobium content was measured based on "titanium ore-niobium quantification method" described in JIS M-8321. That is to say, 0.5g of sample was weighed, this sample was transferred into a nickel crucible containing 5g of melting mixture [sodium hydroxide:sodium peroxide =1:2 (mass ratio)], mixed, then the surface of this sample was covered with approximately 2g of anhydrous sodium carbonate, and the sample was heat melted inside the crucible to generate a melt. This melt was left to cool while still placed inside the crucible, then, 100mL of warm water and 50mL of hydrochloric acid were added to the melt in small amounts to dissolve, and water was further adjusted to 250mL. This solution was measured with an ICP emission spectrophotometer to determine the niobium content. However, the measurement wavelength was 309.42nm.

(5) Vanadium content in titanium oxide (ppm)

As a sample, 0.6g of titanium oxide was weighed in a container, 10mL of nitric acid was added, decomposed inside a microwave sample decomposition apparatus, the obtained solution was adjusted to 25mL, and quantification analysis was carried out using an ICP emission spectrophotometer. Microwave sample decomposition apparatus was MDS-2000 manufactured by ASTEC Co., Ltd. In addition, measurement wavelength was 311.07nm.

(6) Average particle size of titanium oxide

Using a powder specific surface measurement apparatus (permeabilization method) model "SS-100" manufactured by Shimadzu, a sample tube having a cross section of 2cm$^2$ and a height of 1 cm was filled with 3g of sample, average particle size of titanium oxide was calculated from the time of permeation of 20cc of air in a 500mm water column.

[Example 1]

(Preparation of titanium oxide)

Titanium oxide was obtained by the so-called chlorine method process, which oxidizes in gas phase titanium halide. The surface of the obtained titanium oxide was surface treated with alumina, then, surface treated with isobutyl triethoxy silane. Note that surface treatment amount due to alumina (surface covering quantity) was 3 mass%, and the surface treatment amount due to trimethylol ethane (surface covering quantity) was 0.3 mass%.

While feeding 80 mass parts of pellet of polylactic acid series polymer having a weight average molecular weight of 200,000 (NW4032D manufactured by Cargill Dow Polymer; L isomer content amount: 99.5%; D isomer content amount: 0.5%; glass transition temperature: 65°C; refractive index: 1.45) and 20 mass parts of the above-mentioned titanium oxide having an average particle size 0.28μm (niobium content: 8ppm; vanadium content: 4ppm; refractive index: 2.5 or greater) with separate constant mass feeders, extrusion kneading was carried out using a 40mm biaxial extruder, at a setting temperature of 200°C, extrusion was carried out by setting the conduits and T die base to 200°C, and cooling solidification was carried out to form a sheet. In addition, the obtained sheet was biaxially stretched at a temperature of 65°C, 3-fold in the MD direction, and 3-fold in the TD direction, then, it was heat-treated at 140°C, to obtain a heat shield sheet having a thickness of 230μm. Then, measurements of the average reflectance and heat shield property of the obtained heat shield sheet were carried out. The results are indicated in Table 1.

[Example 2]

While feeding 50 mass parts of polylactic acid series polymer having a weight average molecular weight of 200,000 (NW4032D, manufactured by Cargill Dow Polymer/D isomer content amount: 0.5%; glass transition temperature: 65°C), 30 mass parts of pellet of an acrylic copolymer comprising a butyl acrylate/methacrylate random copolymer (SUMIPEX FA, manufactured by Sumitomo Chemical Co., Ltd.; butyl acrylate content: 40 mass%; glass transition temperature: 46°C; refractive index: 1.48), and 20 mass parts of the above-mentioned titanium oxide having an average particle size of 0.28μm (niobium content: 8ppm; vanadium content: 4ppm; refractive index: 2.5 or greater) with separate constant mass feeders, extrusion kneading was carried out using a 40mm biaxial extruder, at a setting temperature of 200°C, extrusion was carried out by setting the conduits and T die base to 200°C, and cooling solidification was carried out to form a sheet. In addition, the obtained sheet was biaxially stretched at a temperature of 65°C, 3-fold in the MD direction, and 3-fold in the TD direction, then, it was heat-treated at 140°C, to obtain a heat shield sheet having a thickness of 230μm. Then, measurements of the average reflectance and heat shield property of the obtained heat shield sheet were carried out. The results are indicated in Table 1.

[Example 3]

While feeding 80 mass parts of pellet of tetrafluoroethylene-hexafluoropropylene-vinylidene fluoride terpolymer having a melting point of 120°C (THV, refractive index1.36) and 20 mass parts of the above-mentioned titanium oxide having an average particle size of 0.28μm (niobium content: 8ppm; vanadium content: 4ppm; refractive index: 2.5 or greater) with separate constant mass feeders, extrusion kneading was carried out using a 40mm biaxial extruder, at a setting temperature of 200°C, extrusion was carried out by setting the conduits and T die base to 200°C, and cooling solidification was carried out to form a sheet, and a heat shield sheet having a thickness of 230μm was obtained. Then, the obtained heat shield sheet was measured for the average reflectance and heat shield property. The results are indicated in Table 1.

[Comparative Example 1]

To 100 mass parts of a vinyl chloride resin having a polymerization degree of 1100 (refractive index: 1.54), 35 mass parts of a polyester series macromolecular plasticizer (manufactured by ADEKA Corporation) as plasticizer, 2 mass parts of above-mentioned titanium oxide having an average particle size of 0.28μm (niobium content: 8ppm; vanadium content: 45ppm; refractive index: 2.5 or greater) and barium stearate and zinc stearate as stabilizers were added, mixed using a ribbon blender, this mix composition was formed into a sheet shape with a calender roll, to obtain a sheet with a thickness of 230μm. Then, this sheet was measured for average reflectance and heat shield property, similarly to Example 1. The results are indicated in Table 1.

[Table 1]

|  | Polymer | Filler | Average reflectance (%) | Heat shield property (°C) |
|---|---|---|---|---|
| Example 1 | PLA | Titanium oxide | 89.3 | 9 |
| Example 2 | PLA/Acrylic | Titanium oxide | 93.1 | 6 |
| Example 3 | THV | Titanium oxide | 89.5 | 7 |
| Comparative Example 1 | PVC | Titanium oxide | 79.6 | 25 |

From the results in Table 1, the heat shield sheets from Examples 1 to 3 were confirmed to have high average reflectance in the infrared radiation region, and to have excellent heat shield properties.

A graph showing the reflectance (measured at wavelengths from 810nm to 2,100nm) of the sheets obtained in the examples and comparative example is shown in Fig.1. In addition to the above-mentioned examples and comparative example, the reflectance of a heat shield sheet prepared similarly to Example 3 except that polypropylene (PP; melting point: 170°C; refractive index: 1.50) was used as base resin is also shown in this Fig. 1, (represented by PP in the Fig.). The average reflectance of this heat shield sheet (PP) at the wavelengths of 810nm to 2,100nm was 85.4%. From this result, embodiments of Examples 1 to 3 having higher average reflectance than when polypropylene was used as base resin, were confirmed to be excellent embodiments.

**Claims**

1. A heat shield sheet comprising a resin composition containing a resin having a refractive index of less than 1.52 and a fine powdery filler having a refractive index of 1.60 or greater, and having an average reflectance of 80% or greater at wavelengths from 810nm to 2,100nm.

2. A heat shield sheet provided with a heat-shield layer comprising a resin composition containing a resin having a refractive index of less than 1.52 and a fine powdery filler having a refractive index of 1.60 or greater, and a metal thin film layer formed on one side or both sides of said heat-shield layer, and having an average reflectance of 80% or greater at wavelengths from 810nm to 2,100nm.

3. The heat shield sheet as recited in Claim 1 or 2, wherein said resin having a refractive index of less than 1.52 is at least one species of resin chosen from the group comprising an aliphatic polyester series resin, an acrylic series resin, a fluorine series resin and a polyolefin series resin.

4. The heat shield sheet as recited in Claim 1 or 2, wherein said resin having a refractive index of less than 1.52 is at least one species of resin chosen from the group comprising an aliphatic polyester series resin, an acrylic series resin and a fluorine series resin.

5. The heat shield sheet as recited in Claim 1 or 2, wherein said resin having a refractive index of less than 1.52 is a mixed resin of two or more species chosen from the group comprising an aliphatic polyester series resin, an acrylic series resin, a fluorine series resin and a polyolefin series resin.

6. The heat shield sheet as recited in any of Claims 3 to 5, wherein said aliphatic polyester series resin is a lactic acid series polymer.

7. The heat shield sheet as recited in any of Claims 1 to 6, wherein said fine powdery filler having a refractive index of 1.60 or greater is titanium oxide.

8. The heat shield sheet as recited in Claim 7, wherein said titanium oxide is provided with an inorganic oxide surface treatment layer surface treated with alumina, or silica formed by the gas phase method, and an organic compound surface treatment layer surface treated with at least one species of organic compound chosen from the group comprising a siloxane compound, a silane coupling agent, a multivalent alcohol, a titanium coupling agent, an alkanol amine or a derivative thereof, and, a higher fatty acid or a metal salt thereof, and the like, the amount of said inorganic oxide surface treatment layer being 1 to 5 mass% of the total mass of titanium oxide after surface treatment, and the amount of said organic compound surface treatment layer is 0.01 to 5 mass% of the total mass of titanium oxide after surface treatment.

9. The heat shield sheet as recited in Claim 7 or 8, wherein said titanium oxide is titanium oxide having a content in niobium of 10ppm or less, and, a content in vanadium of 5ppm or less.

10. The heat shield sheet as recited in any of Claims 1 to 9, used as a back sheet for solar battery.

11. A heat shield material using the heat shield sheet as recited in any of Claims 1 to 10.

Figure 1

## INTERNATIONAL SEARCH REPORT

| International application No. |
|---|
| PCT/JP2007/051700 |

A.  CLASSIFICATION OF SUBJECT MATTER
*C08J5/18*(2006.01)i, *B32B15/08*(2006.01)i, *C08K3/22*(2006.01)i, *C08L27/12*
(2006.01)i, *C08L33/06*(2006.01)i, *C08L67/04*(2006.01)i

According to International Patent Classification (IPC) or to both national classification and IPC

B.  FIELDS SEARCHED

Minimum documentation searched (classification system followed by classification symbols)
C08J5/18, C08K3/00-13/08, C08L1/00-101/16

Documentation searched other than minimum documentation to the extent that such documents are included in the fields searched
Jitsuyo Shinan Koho            1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | WO 2004/104077 A1 (Mitsubishi Plastics, Inc.),<br>02 December, 2004 (02.12.04),<br>Claims; page 1, lines 6 to 8; page 4, line 22<br>to page 11, line 9; examples<br>& CN 1791630 A         & EP 1627894 A1<br>& JP 2006-336022 A    & KR 20060008324 A | 1-11 |
| X | JP 9-208817 A (Mitsui Toatsu Chemicals, Inc.),<br>12 August, 1997 (12.08.97),<br>Claims; Par. No. [0018]; examples<br>& DE 69613081 D1        & EP 776927 A1<br>& EP 776927 B1          & KR 100235153 B1<br>& US 5766748 A | 1-11 |

☒   Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 February, 2007 (15.02.07) | Date of mailing of the international search report<br>27 February, 2007 (27.02.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2007/051700

C (Continuation).    DOCUMENTS CONSIDERED TO BE RELEVANT

| Category* | Citation of document, with indication, where appropriate, of the relevant passages | Relevant to claim No. |
|---|---|---|
| X | JP 2004-175983 A  (Mitsubishi Plastics, Inc.), 24 June, 2004 (24.06.04), Claims; Par. Nos. [0010], [0012]; examples (Family: none) | 1-11 |
| X | JP 8-259731 A  (Nippon Carbide Industries Co., Ltd.), 08 October, 1996 (08.10.96), Claims; Par. Nos. [0011] to [0016], [0018] to [0021]; examples & JP 3623008 B2 | 1-11 |
| E,X | JP 2007-33738 A  (Mitsubishi Plastics, Inc.), 08 February, 2007 (08.02.07), Claims; examples (Family: none) | 1-11 |
| E,X | JP 2007-30284 A  (Mitsubishi Plastics, Inc.), 08 February, 2007 (08.02.07), Claims; examples (Family: none) | 1-11 |
| P,X | JP 2006-145912 A  (Mitsubishi Plastics, Inc.), 08 June, 2006 (08.06.06), Claims; examples (Family: none) | 1-11 |
| P,X | JP 2006-145573 A  (Mitsubishi Plastics, Inc.), 08 June, 2006 (08.06.06), Claims; examples & WO 2006/054475 A1 | 1-11 |
| P,X | JP 2006-145568 A  (Mitsubishi Plastics, Inc.), 08 June, 2006 (08.06.06), Claims; examples (Family: none) | 1-11 |

Form PCT/ISA/210 (continuation of second sheet) (April 2005)

**EP 1 980 391 A1**

**REFERENCES CITED IN THE DESCRIPTION**

**Patent documents cited in the description**

- JP 59013325 A
- JP H70274738 A
- JP H445546 B
- JP H881567 A
- JP 2002012679 A